# EUROPÄISCHE PATENTSCHRIFT

(11) **EP 4 042 111 B1**
(45) Veröffentlichungstag und Bekanntmachung des Hinweises auf die Patenterteilung: **17.01.2024**
(21) Anmeldenummer: 20775288.2
(22) Anmeldetag: 18.09.2020
(51) Int. Cl.: G01D 3/036, G01D 3/08, G01F 1/00, G08B 21/00, G01F 1/32, G01F 1/34, G01F 1/58, G01F 1/84, G01F 25/10

(54) **VERFAHREN ZUM ÜBERWACHEN EINES MESSGERÄTE-SYSTEMS**
METHOD FOR MONITORING A MEASURING DEVICE SYSTEM
PROCÉDÉ DE SURVEILLANCE D'UN SYSTÈME DE DISPOSITIF DE MESURE

(30) Priorität: 07.10.2019 DE 102019126883
(43) Veröffentlichungstag der Anmeldung: 17.08.2022
(73) Patentinhaber: Endress + Hauser Flowtec AG, 4153 Reinach (CH)
(72) Erfinder: TSCHABOLD, Peter, 4226 Breitenbach (CH)
(74) Vertreter: Hahn, Christian
(86) Internationale Anmeldenummer: PCT/EP2020/076172
(87) Internationale Veröffentlichungsnummer: WO 2021/069192

(56) Entgegenhaltungen:
- WO-A1-2009/134268
- DE-A1-102011 076 838
- DE-A1-102013 106 157

## Beschreibung

Die Erfindung betrifft ein Verfahren zum Überwachen eines mittels eines ersten Meßgeräts und mittels eines zweiten Meßgeräts gebildeten Meßgeräte-Systems, insb. nämlich Verfahren zum Überprüfen einer Funktionstüchtigkeit des Meßgeräte-Systems und/oder zum Feststellen einer Störung des Meßgeräte-Systems.

In der industriellen Meßtechnik werden zur Ermittlung einer oder mehrerer Meßgrößen, beispielsweise eines Massestroms und/oder einer Dichte, eines in einer Prozeßleitung, beispielsweise einer Rohrleitung strömenden Meßstoffs oftmals jeweils mittels zwei oder mehreren (Einzel-)Meßgeräten gebildete Meßgeräte-Systeme bzw. Meßanordnungen eingesetzt. Beispiele für ein solches mittels eines ersten Meßgeräts und mittels wenigstens eines zweiten Meßgeräts gebildeten Meßgeräte-System sind u.a auch aus der DE 10 2013 106157 A1, der DE 10 2011 076838 A1, der US-A 2007/0084298, der US-A 2011/0161018 der US-A 2012/0042732, der WO-A 2009/134268, der WO-A 2016/176224 oder der WO-A 2018/083453 bekannt.

Bei einem solchen Meßgeräte-System dient das erste Meßgerät zum Erzeugen eines, typischerweise elektrischen, ersten Meßsignals, das wiederum wenigstens einen Signalparameter, beispielsweise nämlich eine Amplitude, eine Frequenz oder einen Phasenwinkel, aufweist, der einer zeitlichen Änderung einer ersten primären Meßgröße mit einer zeitlichen Änderung folgt, sowie zum Ermitteln von nämliche erste primäre Meßgrößen oder eine davon abhängige erste sekundäre Meßgröße repräsentierenden Meßwerten erster Art anhand wenigstens des ersten Signalparameters des ersten Meßsignals und dient das zweite Meßgerät zum Erzeugen eines, typischerweise elektrischen, zweiten Meßsignals, das ebenfalls wenigstens einen Signalparameter aufweist, der einer zeitlichen Änderung einer, ggf. auch von der ersten primären Meßgröße abhängigen, zweiten primären Meßgröße mit einer zeitlichen Änderung folgt sowie zum Ermitteln von die zweite primäre Meßgröße oder eine davon abhängige zweite sekundäre Meßgröße repräsentierenden Meßwerten zweiter Art anhand wenigstens des ersten Signalparameters des zweiten Meßsignals. Zum Erfassen und Umwandeln der jeweiligen primären Meßgröße in das diese jeweils repräsentierende Meßsignal weist jedes der Meßgerät jeweils einen entsprechenden Meßwandler auf, der wiederum mit einer das jeweils gelieferte Meßsignal entsprechend auswertende Meßgerät-Elektronik des jeweiligen Meßgeräts elektrisch verbunden ist. Die Meßwandler können beispielsweise strömungstechnisch in Reihe oder auch strömungstechnisch parallel geschaltet sein. Bei den in der US-A 2007/0084298, der US-A 2011/0161018, US-A 2012/0042732 bzw. WO-A 2009/134268 beschriebenen Meßgeräte-Systemen ist beispielsweise das erste Meßgerät jeweils dafür eingerichtet, als erste primär Meßgröße einen Massestrom und/oder als eine erste sekundäre Meßgröße einen Volumenstrom des durch dieses Meßgerät strömenden Fluids zu messen und ist das zweite Meßgerät dafür eingerichtet, als zweite primäre Meßgröße einen Druck und/oder eine Druckdifferenz innerhalb eines durch nämliches Meßgerät strömenden Fluids, beispielsweise auch einen Druckabfall über dem ersten Meßgerät, und/oder als eine zweite sekundäre Meßgröße einen Volumenstrom nämlichen Fluids zu messen. Bei dem ersten Meßgerät kann es sich beispielsweise um ein konventionelles Coriolis-Massedurchfluß-Meßgerät bzw. Coriolis-Massedurchfluß/-Dichte-Meßgerät handeln und das zweite Meßgerät kann beispielsweise ein Differenzdruck-Volumendurchfluß-Meßgerät sein. Darüberhinaus kann ein solches Meßgeräte-System auch so ausgebildet sein, daß, wie auch in der US-A 2007/0084298 oder der WO-A 2009/134268 beschrieben, wenigstens eines von dessen ersten und zweiten Meßgeräten das jeweilige Meßsignal mittels beiden Meßwandlern generiert bzw. daß der Meßwandler des einen der beiden Meßgerät zumindest anteilig auch als Bestandteil des Meßwandler des jeweils anderen Meßgerät dient.

Wie u.a. in der WO-A 2009/134268 erörtert, können die vorbezeichneten Meßwerte erster und zweiter Art u.a. auch dafür verwendet werden, um anhand einer Abweichung zwischen den nominell weitgehend gleichen Meßwerten das Meßgeräte-Systems daraufhin zu überwachen, ob bzw. inwieweit eine Störung des Meßgeräte-Systems, beispielsweise in Gestalt eines Belags an einer Innenwand eines oder mehrerer in die Messung involvierten Rohre, vorliegt, derart, daß aufgrund des Vorliegens der Störung einerseits und einer erhöhten (Quer-)Empfindlichkeit wenigstens eines der Meßsignale bzw. dessen wenigstens einen Signalparameter auf eine entsprechende Störgröße anderseits, derart, die Meßwerte erster Art und/oder die Meßwerte zweiter Art einen inakzeptabel hohen Meßfehler aufweisen. Eine weitere entsprechend zu diagnostizierende Störung eines solchen Meßgeräte-Systems kann beispielsweise auch vorliegen, falls das Meßgeräte-Systems starken elektrischen und/oder magnetischen Feldern, etwa infolge von in der Nähe stationierten hohe elektrische Gleichströme führenden Anlagen oder starken Magneten. Im Ergebnis einer solchen Störung kann die zeitliche Änderung zumindest eines der Signalparameter der ersten und zweiten Meßsignale zumindest teilweise auf eine solche Störung bzw. deren zeitliche Änderung zurückzuführen sein, mithin können damit ermittelte Meßwerte in durchaus erheblichem Maße verfälscht sein.

Untersuchungen an Meßgeräte-Systeme der vorbezeichneten Art haben allerdings ferner ergeben, daß bei Anwendung eines solchen Verfahrens zur Diagnose von Störungen bei Meßgeräte-Systemen der in Rede stehenden Art bzw. zur Überwachung solcher Meßgeräte-Systeme, nicht zuletzt aufgrund der typischerweise unterschiedlichen Meßgenauigkeiten der ersten und zweiten Meßgeräte einerseits und der typischerweise unterschiedlichen Empfindlichkeiten der von den Meßgeräte gelieferten Meßsignale auf solche Störungen anderseits eine Schwelle für die Detektion nämlicher Störungen durchaus erheblich über dem eigentlich akzeptierten Toleranzmaß für Meßfehler liegen kann; dies im besonderen in der Weise, daß die Störung erst erkannt werden kann, wenn sie ein vergleichsweise hohes Ausmaß angenommen und/oder, etwa im Falle von über einen längeren Meßzeitraum hinweg totalisierter Meßwerte, zeitlich bereits lange angedauert hat.

Dem Rechnung tragend besteht eine Aufgabe der Erfindung darin, Meßgeräte-Systeme der vorbezeichneten Art dahingehend zu verbessern, daß allfällig darin auftretende Störungen bzw. entsprechende Verfälschungen von deren Meßwerten bereits frühzeitig und verläßlich erkannt werden können.

Zur Lösung der Aufgabe besteht die Erfindung in einem Verfahren zum Überwachen eines mittels eines ersten Meßgeräts und mittels eines zweiten Meßgeräts gebildeten, beispielsweise dem Erfassen von Meßgrößen eines in einer Rohrleitung strömenden Fluids dienlichen, Meßgeräte-Systems, beispielsweise nämlich Verfahren zum Überprüfen einer Funktionstüchtigkeit des Meßgeräte-Systems und/oder zum Feststellen einer Störung des Meßgeräte-Systems, welches Verfahren folgende Schritte umfaßt:
- Erzeugen eines, beispielsweise elektrischen, ersten Meßsignals mittels des ersten Meßgeräts, derart, daß das Meßsignal wenigstens einen ersten Signalparameter, beispielsweise eine Amplitude, eine Frequenz oder einen Phasenwinkel, aufweist, der sowohl einer zeitlichen Änderung einer ersten primären Meßgröße als auch einer zeitlichen Änderung einer von nämlicher ersten Meßgröße unabhängigen, beispielsweise eine Funktionstüchtigkeit des Meßgeräte-Systems beeinträchtigenden und/oder eine Störung des Meßgeräte-Systems bewirkenden, Störgröße jeweils mit einer zeitlichen Änderung folgt;
- Erzeugen eines, beispielsweise elektrischen, zweiten Meßsignals mittels des zweiten Meßgeräts, derart, daß das Meßsignal wenigstens einen ersten Signalparameter, beispielsweise eine Amplitude, eine Frequenz oder einen Phasenwinkel, aufweist, der einer zeitlichen Änderung einer, beispielsweise von der ersten primären Meßgröße abhängigen und/oder von der Störgröße unabhängigen, zweiten primären Meßgröße mit einer zeitlichen Änderung folgt;
- Ermitteln von die erste primäre Meßgrößen oder eine davon abhängige erste sekundäre Meßgröße repräsentierenden Meßwerten erster Art anhand wenigstens des ersten Signalparameters des ersten Meßsignals;
- Ermitteln von die zweite primäre Meßgröße oder eine davon abhängige zweite sekundäre Meßgröße repräsentierenden Meßwerten zweiter Art anhand wenigstens des ersten Signalparameters des zweiten Meßsignals;
- Verwenden sowohl von Meßwerten erster Art als auch von Meßwerten zweiter Art zum Ermitteln einer Fehlerkennzahl, wobei die Fehlerkennzahl einen durch eine Änderung der Störgröße verursachten, beispielsweise erhöhten und/oder als kritisch eingestuften, Geschwindigkeitsfehler des Meßgeräte-Systems, nämlich eine Abweichung zwischen einer, beispielsweise momentanen oder mittleren, Änderungsrate der Meßwerte erster Art und einer, beispielsweise momentanen oder mittleren, Änderungsrate der Meßwerte zweiter Art repräsentiert, beispielsweise nämlich quantifiziert.

Nach einer ersten Ausgestaltung der Erfindung ist ferner vorgesehen, daß das Erzeugen einer ein Ausmaß der Störgröße zumindest qualitativ anzeigenden, beispielsweise als Alarm deklarierten, Meldung in Abhängigkeit von der ermittelten Fehlerkennzahl umfaßt.

Nach einer zweiten Ausgestaltung der Erfindung ist ferner vorgesehen, daß das Ausgeben von Meßwerten erster Art und/oder Meßwerten zweiter Art als qualifizierte Meßwerte des Meßgeräte-Systems in Abhängigkeit von der ermittelten Fehlerkennzahl erfolgt.

Nach einer dritten Ausgestaltung der Erfindung ist ferner vorgesehen, daß das eine Ausgabe zumindest von Meßwerten erster Art als qualifizierte Meßwerte des Meßgeräte-Systems in Abhängigkeit von der ermittelten Fehlerkennzahl verhindert wird.

Nach einer vierten Ausgestaltung der Erfindung ist ferner vorgesehen, daß das Ermitteln der Fehlerkennzahl ein, beispielsweise wiederkehrendes, Berechnen wenigstens eines die Fehlerkennzahl quantifizierenden Kennzahlwertes, beispielsweise nämlich ein Berechnen mehrerer, zeitlich aufeinanderfolgender Kennzahlwerte, umfaßt, beispielsweise derart, daß eine ansteigende Fehlerkennzahl einen zunehmenden Geschwindigkeitsfehler repräsentiert. Diese Ausgestaltung der Erfindung weiterbildend ist ferner vorgesehen, daß wenigstens ein Kennzahlwert der Fehlerkennzahl mit einem dafür vorgegebenen Schwellenwert verglichen wird, wobei der Schwellenwert einen maximal zulässigen Geschwindigkeitsfehler des Meßgeräte-Systems repräsentiert, beispielsweise nämlich quantifiziert, und daß die Meldung erzeugt wird, falls der Kennzahlwert den Schwellenwert überschreitet bzw. überschritten hat. Diese Ausgestaltung der Erfindung weiterbildend ist ferner vorgesehen, daß das Ausgeben von Meßwerten erster Art und/oder Meßwerten zweiter Art als qualifizierte Meßwerte des Meßgeräte-Systems erfolgt, falls der wenigstens Kennzahlwert den Schwellenwert nicht überschritten hat, und/oder das eine Ausgabe zumindest von Meßwerten erster Art als qualifizierte Meßwerte des Meßgeräte-Systems verhindert wird, falls der wenigstens eine Kennzahlwert den Schwellenwert überschritten hat.

Nach einer fünften Ausgestaltung der Erfindung ist ferner vorgesehen, daß das Ermitteln der Fehlerkennzahl, beispielsweise nämlich das Berechnen eine oder mehrerer die Fehlerkennzahl quantifizierenden Kennzahlwerten, ein Ermitteln einer Meßwerte-Differenz erster Art, nämlich einer Differenz von zwei für ein vorgegebenes Zeitintervall zeitlich aufeinanderfolgend ermittelte Meßwerte erster Art, und ein Ermitteln einer Meßwerte-Differenz zweiter Art, nämlich einer Differenz von zwei für nämliches Zeitintervall zeitlich aufeinanderfolgend ermittelte Meßwerte zweiter Art, umfaßt. Diese Ausgestaltung der Erfindung weiterbildend ist ferner vorgesehen, daß das Ermitteln der Fehlerkennzahl ein Ermitteln eines Quotienten aus der Meßwerte-Differenz erster Art und der Meßwerte-Differenz zweiter Art umfaßt.

Nach einer sechsten Ausgestaltung der Erfindung ist ferner vorgesehen, daß das Ermitteln der Fehlerkennzahl ein Ermitteln einer Meßwerte-Differenz erster Art, nämlich einer Differenz von zwei für ein vorgegebenes Zeitintervall zeitlich aufeinanderfolgend ermittelte Meßwerte erster Art, und einer Meßwerte-Differenz zweiter Art, nämlich einer Differenz von zwei für nämliches Zeitintervall zeitlich aufeinanderfolgend ermittelte Meßwerte zweiter Art, sowie ein Ermitteln sowohl einer Änderungsrate der Meßwerte erster Art aus der Meßwerte-Differenz erster Art und dem vorgegebenen Zeitintervall als auch einer Änderungsrate der Meßwerte zweiter Art aus der Meßwerte-Differenz erster Art und dem vorgegebenen Zeitintervall umfaßt. Diese Ausgestaltung der Erfindung weiterbildend ist ferner vorgesehen, daß das Ermitteln der Fehlerkennzahl ein Ermitteln eines Quotienten aus der Änderungsrate der Meßwerte erster Art und der Änderungsrate der Meßwerte zweiter Art umfaßt.

Nach einer siebenten Ausgestaltung der Erfindung ist ferner vorgesehen, daß das erste Meßgerät ein Coriolis-Massedurchfluß-Meßgerät, beispielsweise ein Coriolis-Massedurchfluß-/Dichte-Meßgerät, ist.

Nach einer achten Ausgestaltung der Erfindung ist ferner vorgesehen, daß das erste Meßgerät dafür eingerichtet ist, einen Massestrom und/oder einen Volumenstrom, beispielsweise auch eine Dichte, eines durch nämliches Meßgerät strömenden Fluids zu messen.

Nach einer neunten Ausgestaltung der Erfindung ist ferner vorgesehen, daß das zweite Meßgerät ein Differenzdruck-Meßgerät ist.

Nach einer zehnten Ausgestaltung der Erfindung ist ferner vorgesehen, daß das zweite Meßgerät dafür eingerichtet ist, eine Druckdifferenz innerhalb eines durch nämliches Meßgerät strömenden Fluids und/oder einen Volumenstrom nämlichen Fluids zu messen.

Nach einer elften Ausgestaltung der Erfindung ist ferner vorgesehen, daß die erste primäre Meßgröße ein Massestrom eines das erste Meßgerät, beispielsweise nämlich sowohl das erste Meßgerät als auch das zweite Meßgerät, durchströmenden Fluids ist.

Nach einer zwölften Ausgestaltung der Erfindung ist ferner vorgesehen, daß die erste sekundäre Meßgröße ein Volumenstrom eines das erste Meßgerät, beispielsweise nämlich sowohl das erste Meßgerät als auch das zweite Meßgerät, durchströmenden Fluids ist.

Nach einer dreizehnten Ausgestaltung der Erfindung ist ferner vorgesehen, daß die zweite primäre Meßgröße eine Druckdifferenz innerhalb eines das zweite Meßgerät, beispielsweise nämlich sowohl das zweite Meßgerät als auch das erste Meßgerät, durchströmenden Fluids ist.

Nach einer vierzehnten Ausgestaltung der Erfindung ist ferner vorgesehen, daß die zweite sekundäre Meßgröße ein Volumenstrom eines das zweite Meßgerät, beispielsweise nämlich sowohl das zweite Meßgerät als auch das erste Meßgerät, durchströmenden Fluids ist.

Nach einer fünfzehnten Ausgestaltung der Erfindung ist ferner vorgesehen, daß die Störgröße ein magnetischer Fluß bzw. eine magnetische Flußdichte eines Magnetfelds innerhalb des ersten Meßgeräts ist, beispielsweise nämlich eines sich außerhalb des ersten Meßgräts schließenden bzw. durch einen außerhalb des ersten Meßgeräts positionierten Magneten verursachten magnetischen Felds.

Nach einer sechzehnten Ausgestaltung der Erfindung ist ferner vorgesehen, daß das wenigstens das erste Meßsignal wenigstens einen zweiten Signalparameter aufweist, der einer zeitlichen Änderung einer, beispielsweise von wenigstens einer der ersten und zweiten primären Meßgrößen und/oder von der Störgröße unabhängigen, dritten primären Meßgröße, beispielsweise einer Dichte eines das erste Meßgerätbzw. sowohl das erste Meßgerät als auch das zweite Meßgerät, durchströmenden Fluids, mit einer zeitlichen Änderung folgt. Diese Ausgestaltung der Erfindung weiterbildend ist ferner vorgeeshen, das erste Meßsignal auch zum Ermitteln von die dritte primäre Meßgröße repräsentierenden Meßwerten dritter Art zu verwenden. Nämliche Meßwerte dritter Art können zudem zum Ermitteln der Meßwerte erster Art und/oder zum Ermitteln der Meßwerte zweiter Art verwendet werden.

Nach einer siebzehnten Ausgestaltung der Erfindung wird des erste Meßgerät auch zum Erzeugen eines, beispielsweise elektrischen, dritten Meßsignals verwendet, das wenigstens einen ersten Signalparameter, beispielsweise eine Amplitude, eine Frequenz oder einen Phasenwinkel, aufweist, der sowohl der zeitlichen Änderung der ersten primären Meßgröße als auch der zeitlichen Änderung der Störgröße jeweils mit einer zeitlichen Änderung folgt, und werden Meßwerte erster Art anhand auch des ersten Signalparameters des dritten Meßsignals ermittelt.

Ein Grundgedanke der Erfindung besteht darin, eine allfällige Störung des Meßgerät-Systems dadurch zu detektieren, daß die mit deren Eintreffen bzw. deren Verschwinden einhergehende signifikante, ggf. auch sprungartige Änderung des ersten Signalparameters des ersten Meßsignals bzw. der damit gewonnen Meßwerte erste Art detektiert und entsprechend ausgewertet wird; dies im besonderen in der Weise, daß die durch die Störung bewirkte Änderung der Meßwerte erster Art in Relation zu einer zeitgleichen, typischerweise sehr viel geringer ausfallenden bzw. vernachlässigbaren Änderung der Meßwerte zweiter Art durch dieselbe Störung ausgewertet, nämlich in eine den (Fehler-)Zustand des Meßgeräte-Systems zumindest qualitativ repräsentierende, ggf. aber auch entsprechend quantifizierende Fehlerkennzahl umgerechnet wird.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1a, 1b, 1c, 1d: verschiedene Varianten eines für die Erfindung geeigneten Meßgeräte-Systems; und
- Fig. 2: mit einem Meßgeräte-System gemäß einer der Fig. 1a, 1b, 1c und 1d experimentell ermittelte, zeitweise durch eine Störung beeinflußte Meßdaten (Meßwerte).

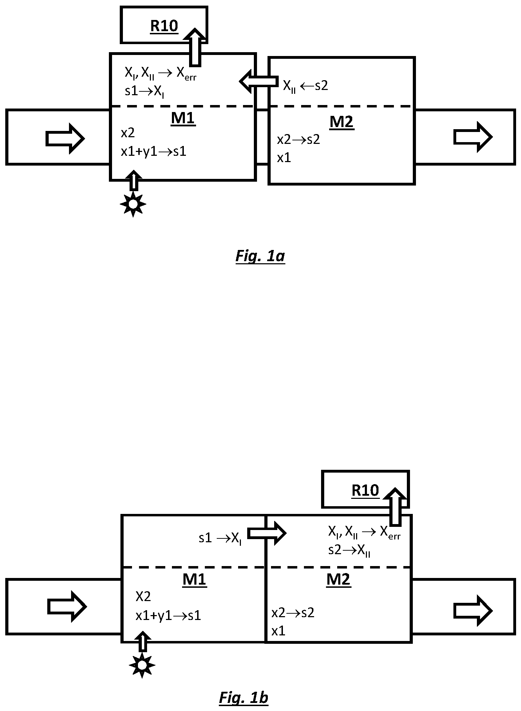

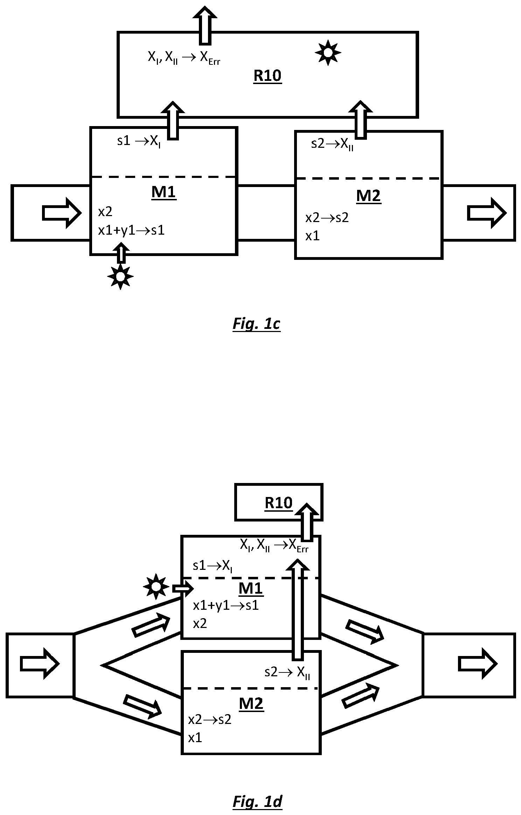

In Fig. 1a, 1b, 1c und 1d ist jeweils schematisch ein mittels eines ersten Meßgeräts M1 und eines zweiten Meßgeräts M2 gebildetes Meßgeräte-System M1+M2 zur Ermittlung von Meßwerten für zwei oder mehr Meßgrößen eines in einer Prozeßleitung, beispielsweise einer Rohrleitung, strömenden Meßstoffs dargestellt. Bei dem Meßgeräte-System M1+M2 wird das erste Meßgerät M1 zum Erzeugen eines, beispielsweise elektrischen, ersten Meßsignals s1 verwendet, das wiederum wenigstens einen Signalparameter, beispielsweise nämlich eine Amplitude, eine Frequenz oder einen Phasenwinkel, aufweist, der einer zeitlichen Änderung einer ersten primären Meßgröße x1, beispielsweise einem Massestrom des im Meßgeräte-System M1+M2 strömenden Meßstoffs, mit einer zeitlichen Änderung folgt. Zudem wird das wird das erste Meßgerät M1 verwendet, um nämliche erste primäre Meßgrößen x1 oder eine davon abhängige erste sekundäre Meßgröße x1' ( f(x1) → x1'), beispielsweise einen Volumenstrom des im Meßgeräte-System M1+M2 strömenden Meßstoffs, repräsentierende Meßwerten X_{I} erster Art anhand wenigstens des ersten Signalparameters des ersten Meßsignals zu ermitteln, beispielsweise in Form von digitalen Meßwerten. Darüberhinaus wird das zweite Meßgerät verwendet, um ein, beispielsweise elektrisches, zweites Meßsignal s2, das ebenfalls wenigstens einen Signalparameter aufweist, der einer zeitlichen Änderung einer, ggf. auch von der ersten primären Meßgröße x1 abhängigen, zweiten primären Meßgröße x2, beispielsweise einer Druckdifferenz des im Meßgeräte-System M1+M2 strömenden Meßstoffs, mit einer zeitlichen Änderung folgt, zu erzeugen und um die zweite primäre Meßgröße x2 oder eine davon abhängige zweite sekundäre Meßgröße x2` (f(x2) → x2`), beispielsweise einen Volumenstrom des im Meßgeräte-System M1+M2 strömenden Meßstoffs, repräsentierende, beispielsweise digitale, Meßwerte X_{II} zweiter Art anhand wenigstens des ersten Signalparameters des zweiten Meßsignals s2 zu ermitteln. Im besonderen kann das Meßgerät M1 ferner dafür eingerichtet sein bzw. verwendet werden, die vom Meßgerät M2 gemessene primäre Meßgröße x2 als sekundäre Meßgröße x1' zu messen, und/oder kann das Meßgerät M2 dafür eingerichtet sein bzw. verwendet werden, die die vom Meßgerät M1 gemessene primäre Meßgröße x1 als sekundäre Meßgröße x2` zu messen; dies beispielsweise auch derart, daß die Meßwerte X_{I} erster Art dieselbe Meßgröße repräsentieren wie die Meßwerte X_{II} zweiter Art. Alternativ oder in Ergänzung kann das Meßgerät M2, abgestimmt auf das Meßgerät M1 ferner so gewählt sein, daß die damit erfaßte primäre Meßgröße x2 von der primären Meßgröße x1 abhängig ist. Nach einer weiteren Ausgestaltung der Erfindung ist das erste Meßgerät M1 ferner dafür eingerichtet, als primäre Meßgröße x1 einen Massestrom m1 (ṁ1 = dM/dt → x1) und/oder als sekundäre Meßgröße x1' einen Volumenstrom V1 (V1 = dV/dt = ṁ/ρ → x1') des durch das Meßgerät M1, ggf. auch durch das Meßgerät M2, strömenden Meßstoffs zu messen. Zudem ist das Meßgerät M2 dafür eingerichtet, als primäre Meßgröße x2 einen Druck p und/oder eine Druckdifferenz Δp2 (Δp → x2) innerhalb des durch nämliches Meßgerät M2, ggf. auch durch das Meßgerät M1, strömenden Meßstoffs und/oder als sekundäre Meßgröße x2' einen Volumenstrom V2 (V2 = dV/dt = f(√Δp) → x2') des Meßstoffs zu messen. Bei dem Meßgerät M1 kann es sich dementsprechend beispielsweise um ein Coriolis-Durchfluß-Meßgerät oder beispielsweise auch um ein magnetisch-induktives Durchfluß-Meßgerät handeln und das Meßgerät M2 kann beispielsweise ein Differenzdruck-Durchfluß-Meßgerät oder ein Wirbel-Durchfluß-Meßgerät sein.

Zum Erfassen der jeweiligen primären Meßgröße und Umwandeln nämlicher Meßgröße in das jeweils repräsentierende Meßsignal s1 (x1 → s1) bzw. s2 (x2 → s2) weist jedes der Meßgeräte M1, M2 jeweils einen in den Verlauf der Prozeßleitung eingegliederten Meßwandler auf, der - wie auch in den Fig. 1a,1b bzw. 1c angedeutet - dafür eingerichtet ist, im Betrieb des Meßgeräte-Systems M1+M2 von Meßstoff durchströmt zu werden. Desweiteren weist jedes der Meßgeräte M1, M2 jeweils eine mit dem jeweiligen Meßwandler elektrisch verbundene Meßgerät-Elektronik auf, die wiederum dafür eingerichtet ist, das jeweils gelieferte Meßsignal s1 bzw. s2 zu empfangen und entsprechend auszuwerten, nämlich anhand dessen Meßwerte X_{I} erster Art bzw. Meßwerte X_{II} zweiter Art zu ermitteln (s1 → X_{I}, s2 → X_{II}). Nach einer weiteren Ausgestaltung der Erfindung ist ferner vorgesehen, daß zumindest das Meßsignal s1 des Meßgeräts M1 wenigstens einen (von dessen ersten Signalparameter verschiedenen) zweiten Signalparameter aufweist, der einer zeitlichen Änderung einer, beispielsweise nämlich auch von wenigstens einer der primären Meßgrößen x1, x2 und/oder von der Störgröße y1 unabhängigen, dritten primären Meßgröße x3 mit einer zeitlichen Änderung folgt; dies im besonderen in der Weise, daß das Meßsignal s1 auch dazu verwendet werden kann, um die dritte primäre Meßgröße x3 repräsentierende Meßwerten X_{III} dritter Art zu ermitteln bzw. zu berechnen. Nicht zuletzt für den vorbezeichneten Fall, daß das Meßgerät M1 als Coriolis-Massedurchfluß-Meßgerät ausgebildet ist, kann der zweite Signalparameter beispielsweise ein Frequenz und kann die dritte primäre Meßgröße x3 beispielsweise eine Dichte (ρ → x3) des das Meßgerät M1, ggf. auch das Meßgerät M2 durchströmenden Fluids sein. Alternativ oder in Ergänzung können Meßwerte X_{III} dritter Art zudem auch zum Ermitteln von Meßwerten X_{I} erster Art und/oder von Meßwerten X_{II} zweiter Art verwendet werden, beispielsweise um einen als Meßgröße x1 gemessenen Massestrom in einen Volumenstrom (V1 = m1 / ρ → X_{I}) oder einen als Meßgröße x2 gemessenen Volumenstrom in einen Massestrom (ṁ2 = V̇2 · ρ → X_{II}) umzurechnen. Nicht zuletzt für diesen Fall, kann das Meßgerät M1 ferner auch eingerichtet sein bzw. verwendet werden, ein, beispielsweise ebenfalls elektrisches und/oder zum Meßsignal s1 Typ gleiches, drittes Meßsignal s3 zu generieren, das wenigstens einen Signalparameter, beispielsweise nämlich eine Amplitude, eine Frequenz oder einen Phasenwinkel, aufweist, der sowohl der vorbzeichneten zeitlichen Änderung Δx1/Δt (Δx1'/Δt) der primären Meßgröße x1 als auch der vorbezeichneten zeitlichen Änderung Δy1/Δt der Störgröße y1 jeweils mit einer zeitlichen Änderung folgt. Nämlicher Signalparameter des Meßsignals s3 kann in Ergänzung zum Signalparameter des Meßsignals s1 ferner dazu verwendet werden um die Meßwerte X_{I} erster Art zu ermitteln.

Wie in Fig. 1a,1b bzw. 1c jeweils schematisiert dargestellt, können die ersten und zweiten Meßgeräte M1, M2 bzw. deren Meßwandler strömungstechnisch in Reihe geschaltet sein, beispielsweise derart, daß in beiden Meßgeräten M1, M2 bzw. in beiden Meßwandlern derselbe Massestrom etabliert ist. Die Meßwandler bzw. die damit gebildeten Meßgeräte M1, M2 können, wie in Fig. 1d angedeutet, aber auch strömungstechnisch parallel geschaltet sein, beispielsweise derart, daß durch beide Meßgeräte M1, M2 bzw. beide Meßwandler derselbe Druckabfall im hindurchströmenden Meßstoff provoziert wird. Darüberhinaus kann das Meßgeräte-System M1+M2 auch in der Weise gebildet sein, daß es hinsichtlich der Art, des Aufbaus und/oder der Anordnung der Meßgeräte M1, M2 bzw. deren Meßwandler zudem beispielsweise auch einem aus der US-A 2007/0084298, der US-A 2011/0161018, der US-A 2012/0042732, der WO-A 2009/134268 oder der WO-A 2016/176224 bekannten Meßgeräte-Systemen entspricht; dies beispielsweise auch derart, daß, wie u.a. auch in der US-A 2007/0084298 oder der WO-A 2009/134268 vorgeschlagen, wenigstens eines der Meßgeräten M1, M2 das jeweilige Meßsignal s1 bzw. s2 mittels beider Meßwandler generiert bzw. der Meßwandler des einen der beiden Meßgeräte M1 oder M2 zumindest anteilig auch als Bestandteil des Meßwandlers des jeweils anderen Meßgeräts M1 bzw. M2 dient, beispielsweise nämlich die mittels des Meßgerät M2 gemessene Meßgröße x2 einem Druckabfall über dem Meßgerät M1 bzw. dessen Meßwandler entspricht (Δp → x2). Alternativ oder in Ergänzung kann das Meßgeräte-System M1+M2 ferner mit einer übergeordneten, Meßdaten erfassenden und auswertenden Recheneinheit R10, beispielsweise einer Speicherprogrammierbaren Steuerung (SPS), einem Durchflußrechner oder einer Workstation (PC), signaltechnisch gekoppelt sein - beispielsweise mittels Datenleitung und/oder mittels Funkverbindung - und kann das Meßgeräte-System zudem dafür eingerichtet sein, zumindest zeitweise Meßwerte erster und/oder zweiter Art an die Recheneinheit R10 zu übermitteln.

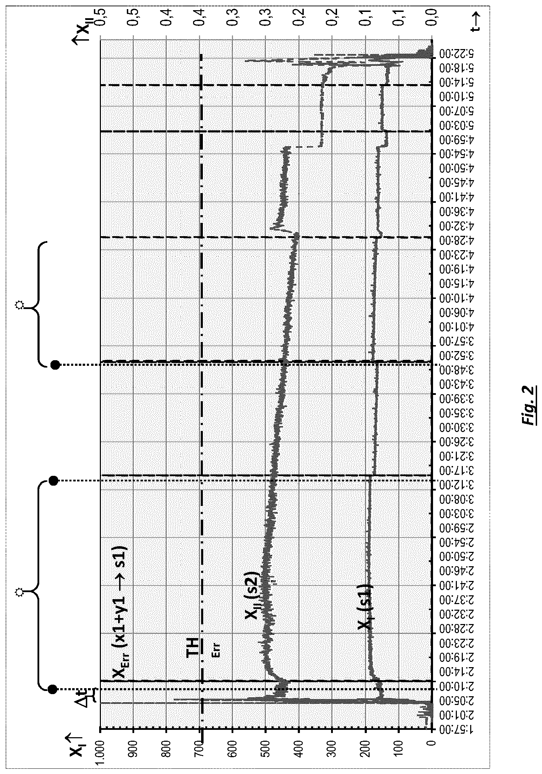

Wie bereits erwähnt kann beim Meßgeräte-System M1+M2 eines der von den Meßgeräten M1, M2 gelieferten wenigstens zwei Meßsignale s1 bzw. s2 - beispielsweise nämlich das vom Meßgerät M1 gelieferte Meßsignal s1 - gegenüber einer mit einer (äußeren) Störung ( 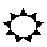 ) korrespondierenden und von der jeweiligen primären Meßgröße unabhängige Störgröße y1 eine hohe, insb. nämlich eine im Vergleich zu dem anderen der Meßsignale - beispielsweise dem Meßsignal s2 - erhöhte, Empfindlichkeit aufweisen; dies im besonderen in der Weise, daß dessen wenigstens einer (auf die jeweilige Meßgröße sensitiver) Signalparameter auch einer zeitlich Änderung nämlicher Störgröße y1 mit einer dementsprechenden zeitlichen Änderung folgt. Im Ergebnis einer solchen Störung ( 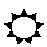 ) des einen der Meßgeräte kann eine Meßgenauigkeit der anhand des Meßsignals gewonnenen Meßwerte verfälscht und damit einhergehend eine Funktionstüchtigkeit des gesamten Meßgeräte-Systems M1+M2 in erheblichem Maße beeinträchtigt sein; dies ggf. auch so, daß die damit generierten Meßwerte, beispielsweise nämlich, wie in Fig. 2 anhand experimentell ermittelter Meßdaten exemplarisch gezeigt, aus dem Meßsignal s1 gewonnene Meßwerte X_{I} erster Art, einen inakzeptabel hohen Meßfehler aufweisen. Beim erfindungsgemäßen Meßsystem M1+M2 ist im besonderen das vom Meßgerät M1 gelieferte Meßsignal s1 sowohl auf Meßgröße x1 als auch die Störgröße y1 sensitiv, derart, daß dessen erster Signalparameter sowohl der zeitlichen Änderung Δx1/Δt (Δx1'/Δt) der primären Meßgröße x1 als auch einer zeitlichen Änderung Δy1/Δt der, insb. von nämlicher ersten Meßgröße x1 unabhängigen, Störgröße y1 jeweils mit einer zeitlichen Änderung folgt. Störgröße y1 kann, nicht zuletzt für den vorbeschriebenen Fall, daß es sich bei dem Meßgerät M1 um ein Massestrom messendes Coriolis-Massedurchfluß-Meßgerät handelt, beispielsweise ein Belag an einer Innenwand eines oder mehrerer Rohre des Meßgeräts oder auch ein magnetischer Fluß bzw. einen magnetische Flußdichte (B → y1) eines äußeren, nämlich sich außerhalb des Meßgräts M1 schließenden bzw. durch einen außerhalb des Meßgeräts positionierten Magneten verursachten magnetischen Felds sein. Nach einer weiteren Ausgestaltung der Erfindung ist das Meßgerät M2, abgestimmt auf die Empfindlichkeit des Meßgeräts M1 bzw. des Meßsignals s1 auf die Störgröße y1, so gewählt, daß das mittels des Meßgeräts M2 generierte Meßsignal s2 eine geringere Empfindlichkeit auf die Störgröße y1 aufweist als das Meßsignal s1; dies beispielsweise derart, daß das Meßsignal s2 keine oder lediglich eine zu vernachlässigende geringe Empfindlichkeit auf die Störgröße y1 aufweist bzw. daß desssen Signalparameter von der Störgröße y1 unabhängig ist.

Zum Überwachen Meßgeräte-Systems M1+M2, insb. nämlich zum Überprüfen der Funktionstüchtigkeit des Meßgeräte-Systems M1+M2 und/oder zum Feststellen einer allfällig auftretenden Störung ( 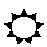 ) des Meßgeräte-Systems M1+M2 ist erfindungsgemäß vorgesehen, sowohl anhand von Meßwerten X_{I} erster Art als auch anhand von Meßwerten X_{II} zweiter Art zunächst eine Fehlerkennzahl Err zu ermitteln, derart, daß die Fehlerkennzahl Err einen durch eine Änderung (dy1/dt → Δy1/Δt) der Störgröße y1 verursachten Geschwindigkeitsfehler ΔX_{I}/ΔX_{II} des Meßgeräte-Systems M1+M2, nämlich eine Abweichung zwischen einer Änderungsrate ΔX_{I}/Δt der Meßwerte X_{I} erster Art und einer - zeitgleich vorliegenden bzw. zeitgleich ermittelten (Δt) - Änderungsrate ΔXn/Δt der Meßwerte X_{II} zweiter Art repräsentiert. Das Ermitteln der Fehlerkennzahl Err kann beim erfindungsgemäßen Meßsystem M1+M2 beispielsweise in einem der Meßgeräte M1, M2 bzw. dessen jeweiliger Meßgerät-Elektronik erfolgen, beispielsweise, wie auch in Fig. 1a und 1d schematisiert gezeigt, im Meßgerät M1 oder im Meßgerät M2 (Fig. 1b). Die Fehlerkennzahl Err kann aber beispielsweise auch, wie u.a. in Fig. 1c gezeigt, erst in der vorbezeichneten übergeordneten Recheneinheit R10 anhand von vom Meßgeräte-System M1+M2 generierten und an nämliche Recheneinheit R10 übermittelten Meßwerten erste und zweiter Art (X_{I}, X_{II}). Wie u.a. aus Fig. 2 ersichtlich kann anhand des vorbezeichneten Geschwindigkeitsfehlers ΔX_{I}/ΔX_{II}, auch bereits anhand von dessen Betrag, bzw. der dementsprechend ermittelten Fehlerkennzahl die vorbezeichnete Störung sehr rasch und sehr verläßlich detektiert werden, indem nämlich gezielt die durch deren Eintreffen (bzw. deren Verschwinden) bewirkten signifikanten Änderungen des Meßsignals s1 bzw. dessen Signalparameters ausgewertet werden.

Nach einer weiteren Ausgestaltung der Erfindung ist ferner vorgesehen, in Abhängigkeit von der ermittelten Fehlerkennzahl Err eine die Anwesenheit der Störung bzw. ein Ausmaß der Störgröße y1 zumindest qualitativ anzeigende, beispielsweise nämlich als Alarm deklarierte, Meldung zu erzeugen. Nämliche Meldung kann beispielsweise an einem der Meßgeräte M1 bzw. M2 oder auch jedem der Meßgeräte M1, M2 ausgegeben werden, beispielsweise visuell wahrnehmbar mittels einer entsprechenden Signalleuchte (LED) und/oder einer Anzeigeeinheit des jeweiligen Meßgeräts. Alternativ oder in Ergänzung kann die Meldung auch als eine entsprechende Nachricht an die vorbezeichnete Recheneinheit R10 übermittelt werden. Die Fehlerkennzahl Err kann beispielsweise in der Weise ermittelt werden, daß sie die Störgröße y1 bzw. deren Einfluß auf das Meßsignal s1 quantifiziert, nämlich in Form von entsprechend berechneten Zahlenwerten repräsentiert; dies beispielsweise derart, daß die Kennzahl in Form einer dimensionslosen Kennzahl (Kenngröße) ermittelt wird und/oder daß eine Fehlerkennzahl Err mit einem hohen Zahlenwert eine einen hohen Meßfehler bewirkende (relevante) Störung und eine Fehlerkennzahl Err mit einem im Vergleich dazu niedrigeren Zahlenwert eine einen vergleichsweise geringeren, ggf. auch zunächst zu vernachlässigenden Meßfehler bewirkende Störung repräsentiert bzw. daß eine ansteigende Fehlerkennzahl Err einen zunehmenden Geschwindigkeitsfehler ΔX_{I}/ΔX_{II} repräsentiert. Die Fehlerkennzahl Err kann beispielsweise aber auch so ermittelt werden, daß sie das Vorliegen einer Störgröße y1 mit einem vorbestimmten, beispielsweise nämlich überhöhten und/oder als kritisch eingestuften, Ausmaß bzw. den damit einhergehenden Einfluß auf das Meßsignal s1 lediglich qualitativ wiedergibt, beispielsweise nämlich das Überschreiten eines dafür vorgegebenen Schwellenwerts signalisiert. Dementsprechend ist nach einer weiteren Ausgestaltung der Erfindung vorgesehen, die Fehlerkennzahl Err dadurch zu ermitteln, indem (zunächst) wenigstens ein die Fehlerkennzahl Err bzw. den Geschwindigkeitsfehler quantifizierender, insb. digitaler, Kennzahlwert X_{Err} berechnet wird; dies beispielsweise auch wiederkehrend und/oder derart, daß mehrere, zeitlich aufeinanderfolgender Kennzahlwerte berechnet werden. Der wenigstens eine Kennzahlwert X_{Err} der Fehlerkennzahl Err kann hernach beispielsweise mit einem dafür vorgegebenen, beispielsweise digitalen und/oder in der jeweiligen Meßgerät-Elektronik gespeicherten, Schwellenwert TH_{Err} verglichen werden, beispielsweise nämlichem einem einen maximal zulässigen Geschwindigkeitsfehler X_{Err,Max} des Meßgeräte-Systems M1+M2 repräsentierenden bzw. quantifizierenden Schwellenwert (X_{Err,Max} → TH_{Err}). Für den Fall, daß der Kennzahlwert X_{Err} den Schwellenwert TH_{Err} überschreitet bzw. überschritten hat kann ferner die vorbezeichnete (Fehler-) Meldung entsprechend generiert werden. Nach einer weiteren Ausgestaltung der Erfindung ist ferner vorgesehen, Meßwerte X_{I} erster Art und/oder Meßwerte X_{II} zweiter Art als qualifizierte Meßwerte des Meßgeräte-Systems in Abhängigkeit von der ermittelten Fehlerkennzahl Err auszugeben, beispielsweise nämlich falls der vorbezeichnete Kennzahlwert X_{Err} den dafür gesetzten Schwellenwert TH_{Err} nicht überschritten hat, bzw. zumindest eine Ausgabe von Meßwerten X_{I} erster Art als qualifizierte Meßwerte des Meßgeräte-Systems in Abhängigkeit von der ermittelten Fehlerkennzahl Err zu verhindern, falls nämlich die Fehlerkennzahl Err ein zu hohen Meßfehler für Meßwerte X_{I} erster Art signalisiert bzw. falls der vorbezeichnete Kennzahlwert X_{Err} den dafür gesetzten Schwellenwert TH_{Err} überschritten hat. Die Kennzahlwert X_{Err} können beispielsweise mit derselben Aktualisierungsrate ermittelt werden wie die Meßwerte erster und zweiter Art.

Nach einer weiteren Ausgestaltung der Erfindung ist ferner vorgesehen, zum Ermitteln der Fehlerkennzahl X_{Err} bzw. zum Berechnen eines oder mehrerer Kennzahlwerten X_{Err} zunächst eine Meßwerte-Differenz ΔX_{I} erster Art, nämlich einer Differenz von zwei für ein vorgegebenes Zeitintervall Δt zeitlich aufeinanderfolgend ermittelte Meßwerte X_{I} erster Art, und eine Meßwerte-Differenz ΔX_{II} zweiter Art, nämlich einer Differenz ΔX_{II} von zwei für nämliches Zeitintervall Δt zeitlich aufeinanderfolgend ermittelte Meßwerte X_{II} zweiter Art zu ermitteln. Basierend auf den Meßwerte-Differenzen erster Art und zweiter Art kann die Fehlerkennzahl X_{Err} bzw. können die Kennzahlwerten X_{Err} beispielsweise dadurch berechnete werden, daß zunächst sowohl eine Änderungsrate ΔX_{I}/Δt der Meßwerte X_{I} erster Art aus der Meßwerte-Differenz ΔX_{I} erster Art und dem vorgegebenen Zeitintervall Δt als auch eine Änderungsrate ΔX_{II}/Δt der Meßwerte X_{II} zweiter Art aus der Meßwerte-Differenz ΔX_{I} erster Art und dem vorgegebenen Zeitintervall Δt ermittelt werden, beispielsweise jeweils als eine momentane oder eine mittlere Änderungsrate, und hernach ein Quotienten aus nämlicher Änderungsrate ΔX_{I}/Δt der Meßwerte X_{I} erster Art und der Änderungsrate ΔX_{II}/Δt der Meßwerte X_{II} zweiter Art berechnet werden. Alternativ oder in Ergänzung kann die Fehlerkennzahl X_{Err} bzw. können die Kennzahlwerten X_{Err} anhand der vorbezeichneten Meßwerte-Differenzen ΔX_{II}, ΔX_{I} erster und zweitere Art sehr einfach auch dadurch ermittelt werden, indem ein entsprechender Quotient ΔX_{I}/ΔX_{II} (Differenzenquotient) aus der Meßwerte-Differenz ΔX, erster Art und der Meßwerte-Differenz ΔX_{II} zweiter Art ermittelt, insb. nämlich berechnet, wird.

## Patentansprüche

1. Verfahren zum Überwachen eines mittels eines ersten Meßgeräts (M1) und mittels eines zweiten Meßgeräts (M2) gebildeten Meßgeräte-Systems, welches Verfahren folgende Schritte umfaßt:
- Erzeugen eines ersten Meßsignals (s1) mittels des ersten Meßgeräts (M1), derart, daß das Meßsignal (s1) wenigstens einen ersten Signalparameter aufweist, der sowohl einer zeitlichen Änderung (Δx1/Δt; Δx1'/Δt) einer ersten primären Meßgröße (x1) als auch einer zeitlichen Änderung (Δy1/Δt) einer von nämlicher ersten Meßgröße (x1) unabhängigen Störgröße (y1) jeweils mit einer zeitlichen Änderung folgt;
- Erzeugen eines zweiten Meßsignals (s2) mittels des zweiten Meßgeräts (M2), derart, daß das Meßsignal (s2) wenigstens einen ersten Signalparameter aufweist, der einer zeitlichen Änderung (Δx2/Δt; Δx2'/Δt) einer, insb. von der ersten primären Meßgröße (x1) abhängigen und/oder von der Störgröße (y1) unabhängigen, zweiten primären Meßgröße (x2) mit einer zeitlichen Änderung folgt;
- Ermitteln von die erste primäre Meßgröße (x1) oder eine davon abhängige erste sekundäre Meßgröße ( f(x1) → x1') repräsentierenden Meßwerten (X_{I}) erster Art anhand wenigstens des ersten Signalparameters des ersten Meßsignals (s1);
- Ermitteln von die zweite primäre Meßgröße (x2) oder eine davon abhängige zweite sekundäre Meßgröße ( f(x2) → x2') repräsentierenden Meßwerten (X_{II}) zweiter Art anhand wenigstens des ersten Signalparameters des zweiten Meßsignals (s2);
- Verwenden sowohl von Meßwerten (X_{I}) erster Art als auch von Meßwerten (X_{II}) zweiter Art zum Ermitteln einer Fehlerkennzahl (Err), wobei die Fehlerkennzahl (Err) einen durch eine Änderung der Störgröße (y1) verursachten Geschwindigkeitsfehler (ΔX_{I}/ΔX_{II}) des Meßgeräte-Systems, nämlich eine Abweichung zwischen einer Änderungsrate (ΔX_{I}/Δt) der Meßwerte (X_{I}) erster Art und einer Änderungsrate (ΔX_{II}/Δt) der Meßwerte (X_{II}) zweiter Art repräsentiert, insb. nämlich quantifiziert.

2. Verfahren nach einem der vorherigen Ansprüche, weiters umfassend: Erzeugen einer ein Ausmaß der Störgröße (y1) zumindest qualitativ anzeigenden, insb. als Alarm deklarierten, Meldung in Abhängigkeit von der ermittelten Fehlerkennzahl (Err).

3. Verfahren nach einem der vorherigen Ansprüche, weiters umfassend:
- Ausgeben von Meßwerten (X_{I}) erster Art als qualifizierte Meßwerte des Meßgeräte-Systems in Abhängigkeit von der ermittelten Fehlerkennzahl (Err).

4. Verfahren nach einem der vorherigen Ansprüche, wobei das Ermitteln der Fehlerkennzahl (Err) ein, insb. wiederkehrendes, Berechnen wenigstens eines die Fehlerkennzahl (Err) quantifizierenden Kennzahlwertes (X_{Err}) , insb. nämlich ein Berechnen mehrerer, zeitlich aufeinanderfolgender Kennzahlwerte, umfaßt, insb. derart, daß eine ansteigende Fehlerkennzahl (Err) einen zunehmenden Geschwindigkeitsfehler ( 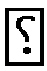 X_{I}/ 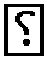 X_{II}) repräsentiert.

5. Verfahren nach dem vorherigen Anspruch, weiters umfassend:
- Vergleichen des wenigstens eines Kennzahlwertes der Fehlerkennzahl (X_{Err}) mit einem dafür vorgegebenen Schwellenwert (TH_{Err}), wobei der Schwellenwert einen maximal zulässigen Geschwindigkeitsfehler des Meßgeräte-Systems repräsentiert ;
- sowie Erzeugen der Meldung, falls der Kennzahlwert (X_{Err}) den Schwellenwert (TH_{Err}) überschreitet bzw. überschritten hat.

6. Verfahren nach einem der vorherigen Ansprüche, weiters umfassend:
- Ausgeben von Meßwerten (X_{I}) erster Art und/oder Meßwerten (X_{II}) zweiter Art als qualifizierte Meßwerte des Meßgeräte-Systems, falls der wenigstens eine Kennzahlwert den Schwellenwert nicht überschritten hat.

7. Verfahren nach einem der vorherigen Ansprüche, wobei das Ermitteln der Fehlerkennzahl (X_{Err}) ein Ermitteln einer Meßwerte-Differenz (ΔX_{I}) erster Art, nämlich einer Differenz von zwei für ein vorgegebenes Zeitintervall (Δt) zeitlich aufeinanderfolgend ermittelte Meßwerte (X_{I}) erster Art, und ein Ermitteln einer Meßwerte-Differenz (ΔX_{II}) zweiter Art, nämlich einer Differenz (ΔX_{II}) von zwei für nämliches Zeitintervall (Δt) zeitlich aufeinanderfolgend ermittelte Meßwerte (X_{II}) zweiter Art, umfaßt.

8. Verfahren nach dem vorherigen Anspruch, wobei das Ermitteln der Fehlerkennzahl (X_{Err}) ein Ermitteln eines Quotienten aus der Meßwerte-Differenz (ΔX_{I}) erster Art und der Meßwerte-Differenz (ΔX_{II}) zweiter Art umfaßt.

9. Verfahren nach einem der vorherigen Ansprüche, wobei das Ermitteln der Fehlerkennzahl (Err) ein Ermitteln sowohl einer Änderungsrate (ΔX_{I}/Δt) der Meßwerte (X_{I}) erster Art aus der Meßwerte-Differenz (ΔX_{I}) erster Art und dem vorgegebenen Zeitintervall (Δt) als auch einer Änderungsrate (ΔX_{II}/Δt) der Meßwerte (X_{II}) zweiter Art aus der Meßwerte-Differenz (ΔX_{I}) erster Art und dem vorgegebenen Zeitintervall (Δt) umfaßt.

10. Verfahren nach dem vorherigen Anspruch, wobei das Ermitteln der Fehlerkennzahl (X_{Err}) ein Ermitteln eines Quotienten aus der Änderungsrate (ΔX_{I}/Δt) der Meßwerte (X_{I}) erster Art und der Änderungsrate (ΔX_{II}/Δt) der Meßwerte (X_{II}) zweiter Art umfaßt.

11. Verfahren nach einem der vorherigen Ansprüche, wobei das erste Meßgerät ein Coriolis-Massedurchfluß-Meßgerät, insb. ein Coriolis-Massedurchfluß-/Dichte-Meßgerät, ist.

12. Verfahren nach einem der vorherigen Ansprüche, wobei das erste Meßgerät dafür eingerichtet ist, einen Massestrom und/oder einen Volumenstrom, insb. auch eine Dichte, eines durch nämliches Meßgerät strömenden Fluids zu messen.

13. Verfahren nach einem der vorherigen Ansprüche, wobei das zweite Meßgerät ein Differenzdruck-Meßgerät ist.

14. Verfahren nach einem der vorherigen Ansprüche, wobei das zweite Meßgerät dafür eingerichtet ist, eine Druckdifferenz innerhalb eines durch nämliches Meßgerät strömenden Fluids und/oder einen Volumenstrom nämlichen Fluids zu messen.

15. Verfahren nach einem der vorherigen Ansprüche,
- wobei die erste primäre Meßgröße (x1) ein Massestrom (m = dM/dt → x1) eines das erste Meßgerät, insb. nämlich sowohl das erste Meßgerät als auch das zweite Meßgerät, durchströmenden Fluids ist; und/oder
- wobei die erste sekundäre Meßgröße (x1') ein Volumenstrom (v = dV/dt → x1') eines das erste Meßgerät, insb. nämlich sowohl das erste Meßgerät als auch das zweite Meßgerät, durchströmenden Fluids ist; und/oder
- wobei die zweite primäre Meßgröße (x2) eine Druckdifferenz (Δp → x2) innerhalb eines das zweite Meßgerät, insb. nämlich sowohl das zweite Meßgerät als auch das erste Meßgerät, durchströmenden Fluids ist; und/oder
- wobei die zweite sekundäre Meßgröße (x2') ein Volumenstrom (v = dV/dt → x2') eines das zweite Meßgerät, insb. nämlich sowohl das zweite Meßgerät als auch das erste Meßgerät, durchströmenden Fluids ist; und/oder
- wobei die Störgröße (y1) ein magnetischer Fluß bzw. eine magnetische Flußdichte (B → y1) eines Magnetfelds innerhalb des ersten Meßgeräts ist, insb. nämlich eines sich außerhalb des ersten Meßgräts (M1) schließenden bzw. durch einen außerhalb des ersten Meßgeräts (M1) positionierten Magneten verursachten magnetischen Felds.

16. Verfahren nach einem der vorherigen Ansprüche, wobei wenigstens das erste Meßsignal (s1) wenigstens einen zweiten Signalparameter aufweist, der einer zeitlichen Änderung einer dritten primären Meßgröße (ρ → x3) mit einer zeitlichen Änderung folgt.

17. Verfahren nach dem vorherigen Anspruch, weiters umfassend: Verwenden des ersten Meßsignals (s1) auch zum Ermitteln von die dritte primäre Meßgröße (x3) repräsentierenden Meßwerten (X_{III}) dritter Art.

18. Verfahren nach dem vorherigen Anspruch, weiters umfassend:
- Verwenden auch von Meßwerten dritter Art (X_{III}) zum Ermitteln der Meßwerte (X_{I}) erster Art; und/oder
- Verwenden auch von Meßwerten (X_{III}) dritter Art zum Ermitteln der Meßwerte (X_{II}) zweiter Art.

19. Verfahren nach einem der Ansprüche 16 bis 18, wobei die dritte primäre Meßgröße (x3) eine Dichte (ρ → x3) eines das erste Meßgerät (M1) durchströmenden Fluids ist.

20. Verfahren nach einem der vorherigen Ansprüche, weiters umfassend:
- Verwenden des ersten Meßgeräts (M1) zum Erzeugen eines dritten Meßsignals (s3), das wenigstens einen Signalparameter aufweist, der sowohl der zeitlichen Änderung (Δx1/Δt; Δx1'/Δt) der ersten primären Meßgröße (x1) als auch der zeitlichen Änderung (Δy1/Δt) der Störgröße (y1) jeweils mit einer zeitlichen Änderung folgt;
- sowie Ermitteln von Meßwerten (X_{I}) erster Art anhand auch des wenigstens einen Signalparameters des dritten Meßsignals (s3).

21. Verfahren nach einem der vorherigen Ansprüche, weiters umfassend: Ausgeben von Meßwerten (X_{II}) zweiter Art als qualifizierte Meßwerte des Meßgeräte-Systems, falls der wenigstens eine Kennzahlwert den Schwellenwert nicht überschritten hat.

22. Verfahren nach einem der vorherigen Ansprüche, weiters umfassend: Verhindern einer Ausgabe zumindest von Meßwerten (X_{I}) erster Art als qualifizierte Meßwerte des Meßgeräte-Systems in Abhängigkeit von der ermittelten Fehlerkennzahl (Err).

## Claims

1. Method for monitoring a measuring device system comprising a first measuring device (M1) and a second measuring device (M2), wherein the method encompasses the following steps:
- Generation of a first measurement signal (s1) using the first measuring device (M1) in such a way that the measurement signal (s1) displays at least one first signal parameter which follows both a temporal change (Δx1 /Δt; Δx1' /Δt) of a first primary measured variable (x1) and a temporal change (Δy1/Δt) of a disturbance variable (y1) that is independent of the stated first measured variable (x1) with a temporal change in each case;
- Generation of a second measurement signal (s2) using the second measuring device (M2) in such a way that the measurement signal (s2) displays at least one first signal parameter which follows a temporal change (Δx2 /Δt; Δx2' /Δt) of a second primary measured variable (x2) which, in particular, is dependent on the first primary measured variable (x1) and/or independent of the disturbance variable (y1) with a temporal change;
- Determination of measured values of the first type (X_{I}) that represent the first primary measured variable (x1) or a first secondary measured variable that is dependent on this variable (f(x1) → x1'), based on at least the first signal parameter of the first measurement signal (s1);
- Determination of measured values of the second type (X_{II}) that represent the second primary measured variable (x2) or a second secondary measured variable that is dependent on this variable (f(x2) 4 x2`), based on at least the first signal parameter of the second measurement signal (s2);
- Use of measured values of the first type (X_{I}) and also measured values of the second type (X_{II}) to determine an error code (Err), wherein the error code (Err) represents, and in particular quantifies, a velocity error (ΔX_{I}/ΔX_{II}) of the measuring device system caused by a change in the disturbance variable (y1), namely a deviation between a rate of change (ΔX_{I}/Δt) in the measured values of the first type (X_{I}) and a rate of change (ΔX_{II}/Δt) in the measured values of the second type (X_{II}).

2. Method according to one of the preceding claims, further comprising: Generation of a message that at least qualitatively indicates the extent of the disturbance variable (yl), in particular declared as an alarm, on the basis of the determined error code (Err).

3. Method according to one of the preceding claims, further comprising:
- Output of measured values of the first type (X,) as qualified measured values of the measuring device system based on the determined error code (Err).

4. Method according to one of the preceding claims, wherein determination of the error code (Err) encompasses a calculation, in particular a recurring calculation, of at least one code value (XErr) that quantifies the error code (Err), in particular namely a calculation of multiple chronologically successive code values, in particular in such a way that an increasing error code (Err) represents an increasing velocity error ([ 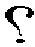 ]X_{I}/[ 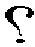 ]X_{II}).

5. Method according to the preceding claim, further comprising:
- Comparison of the at least one code value of the error code (X_{Err}) with a threshold value provided for this (TH_{Err}), wherein the threshold value represents a maximum permitted velocity error of the measuring device system;
- as well as generation of the message if the code value (X_{Err}) exceeds or has exceeded the threshold value (TH_{Err}).

6. Method according to one of the preceding claims, further comprising:
- Output of measured values of the first type (X_{I}) and/or measured values of the second type (X_{II}) as qualified measured values of the measuring device system if the at least one code value has not exceeded the threshold value.

7. Method according to one of the preceding claims, wherein determination of the error code (X_{Err}) encompasses determination of a difference in measured values of the first type (ΔX_{I}), namely a difference between two measured values of the first type (X_{I}) determined in chronological succession for a specified time interval (Δt), and determination of a difference in measured values of the second type (ΔX_{II}), namely a difference (ΔX_{II}) between two measured values of the second type (X_{II}) determined in chronological succession for the stated time interval (Δt).

8. Method according to the preceding claim, wherein determination of the error code (X_{Err}) encompasses determination of a quotient from the difference in measured values of the first type (ΔX_{I}) and the difference in measured values of the second type (ΔX_{II}).

9. Method according to one of the preceding claims, wherein determination of the error code (Err) encompasses determination of a rate of change (ΔX_{I}/Δt) in the measured values of the first type (X_{I}) from the difference in measured values of the first type (ΔX_{I}) and the specified time interval (Δt), as well as a rate of change (ΔX_{II}/Δt) in the measured values of the second type (X_{II}) from the difference in measured values of the first type (ΔX_{I}) and the specified time interval (Δt).

10. Method according to the preceding claim, wherein determination of the error code (X_{Err}) encompasses determination of a quotient from the rate of change (ΔX_{I}/Δt) in the measured values of the first type (X_{I}) and the rate of change (ΔX_{II}/Δt) in the measured values of the second type (X_{II}).

11. Method according to one of the preceding claims, wherein the first measuring device is a Coriolis mass flowmeter, in particular a Coriolis mass flow/density measuring device.

12. Method according to one of the preceding claims, wherein the first measuring device is set up to measure a mass flow and/or a volume flow, in particular also a density, of a fluid flowing through the stated measuring device.

13. Method according to one of the preceding claims, wherein the second measuring device is a differential pressure gage.

14. Method according to one of the preceding claims, wherein the second measuring device is set up to measure a pressure difference within a fluid flowing through the stated measuring device and/or a volume flow of the stated fluid.

15. Method according to one of the preceding claims,
- wherein the first primary measured variable (x1) is a mass flow (m = dM/dt → x1) of a fluid flowing through the first measuring device, in particular both the first measuring device and the second measuring device; and/or
- wherein the first secondary measured variable (x1') is a volume flow (m = dV/dt 4 x1') of a fluid flowing through the first measuring device, in particular both the first measuring device and the second measuring device; and/or
- wherein the second primary measured variable (x2) is a pressure difference (Δp 4 x2) within a fluid flowing through the second measuring device, in particular both the second measuring device and the first measuring device; and/or
- wherein the second secondary measured variable (x2') is a volume flow (v = dV/dt 4 x2') of a fluid flowing through the second measuring device, in particular both the first measuring device and the second measuring device; and/or
- wherein the disturbance variable (y1) is a magnetic flux or a magnetic flux density (B → y1) of a magnetic field inside the first measuring device, in particular of a magnetic field forming outside the first measuring device (M1) or caused by a magnet positioned outside the first measuring device (M1).

16. Method according to one of the preceding claims, wherein at least the first measurement signal (s1) displays at least one second signal parameter that follows a temporal change in a third primary measured variable (p 4 x3) with a temporal change.

17. Method according to the preceding claim, further comprising: Use of the first measurement signal (s1) also to determine the measured values of the third type (X_{III}) that represent the third primary measured variable (x3).

18. Method according to the preceding claim, further comprising:
- Use of the measured values of the third type (X_{III}) also to determine the measured values of the first type (X_{I}); and/or
- Use of the measured values of the third type (X_{III}) also to determine the measured values of the second type (X_{II}).

19. Method according to one of the claims 16 to 18, wherein the third primary measured variable (x3) is a density (p 4 x3) of a fluid flowing through the first measuring device (Ml).

20. Method according to one of the preceding claims, further comprising:
- Use of the first measuring device (M1) to generate a third measurement signal (s3) which displays at least one signal parameter that follows both the temporal change (Δx1/Δt; (Δx1'/Δt) of the first primary measured variable (x1) and the temporal change ((Δy1/Δt) of the disturbance variable (y1) with a temporal change;
- as well as determination of measured values of the first type (X1) also based on the at least one signal parameter of the third measurement signal (s3).

21. Method according to one of the preceding claims, further comprising: Output of measured values of the second type (X_{II}) as qualified measured values of the measuring device system if the at least one code value has not exceeded the threshold value.

22. Method according to one of the preceding claims, further comprising: Prevention of output at least of those measured values of the first type (X1) as qualified measured values of the measuring device system based on the determined error code (Err).

## Revendications

1. Procédé destiné à la surveillance d'un système d'appareils de mesure formé au moyen d'un premier appareil de mesure (M1) et au moyen d'un deuxième appareil de mesure (M2), lequel procédé comprend les étapes suivantes :
- Génération d'un premier signal de mesure (s1) au moyen du premier appareil de mesure (M1), de telle sorte que le signal de mesure (s1) présente au moins un premier paramètre de signal qui suit aussi bien une variation dans le temps (Δx1/Δt - Δx1'/Δt) d'une première grandeur de mesure primaire (x1) qu'une variation dans le temps (Δy1/Δt) d'une grandeur perturbatrice (y1) indépendante de ladite première grandeur de mesure (x1), respectivement avec une variation dans le temps ;
- Génération d'un deuxième signal de mesure (s2) au moyen du deuxième appareil de mesure (M2), de telle sorte que le signal de mesure (s2) présente au moins un premier paramètre de signal qui suit une variation dans le temps (Δx2/Δt ; Δx2'/Δt) d'une deuxième grandeur de mesure primaire (x2), notamment dépendante de la première grandeur de mesure primaire (x1) et/ou indépendante de la grandeur perturbatrice (y1), avec une variation dans le temps ;
- Détermination de valeurs mesurées (X_{I}) de premier type représentant la première grandeur de mesure primaire (x1) ou une première grandeur de mesure secondaire (f(x1) → x1') qui en dépend, à l'aide d'au moins le premier paramètre de signal du premier signal de mesure (s1) ;
- Détermination de valeurs mesurées (X_{II}) de second type représentant la deuxième grandeur de mesure primaire (x2) ou une deuxième grandeur de mesure secondaire (f(x2) → x2') qui en dépend, à l'aide d'au moins le premier paramètre de signal du deuxième signal de mesure (s2) ;
- Utilisation à la fois des valeurs mesurées (X_{I}) de premier type et des valeurs mesurées (X_{II}) de second type pour déterminer un indice d'erreur (Err), l'indice d'erreur (Err) représentant, notamment quantifiant, une erreur de vitesse (ΔX_{I}/ΔX_{II}) du système d'appareils de mesure provoquée par une variation de la grandeur perturbatrice (y1), à savoir un écart entre un taux de variation (ΔX_{I}/Δt) des valeurs mesurées (X_{I}) de premier type et un taux de variation (ΔX_{II}/Δt) des valeurs mesurées (X_{II}) de second type.

2. Procédé selon l'une des revendications précédentes, comprenant en outre l'étape suivante : génération d'un message indiquant au moins qualitativement une étendue de la grandeur perturbatrice (y1), lequel message est notamment déclaré comme alarme, en fonction de l'indice d'erreur (Err) déterminé.

3. Procédé selon l'une des revendications précédentes, comprenant en outre l'étape suivante :
- Sortie de valeurs mesurées (X_{I}) de premier type en tant que valeurs mesurées qualifiées du système d'appareils de mesure en fonction de l'indice d'erreur (Err) déterminé.

4. Procédé selon l'une des revendications précédentes, pour lequel la détermination de l'indice d'erreur (Err) comprend un calcul, notamment répétitif, d'au moins une valeur d'indice (X_{Err}) quantifiant l'indice d'erreur (Err), notamment un calcul de plusieurs valeurs d'indice se succédant dans le temps, notamment de telle sorte qu'un indice d'erreur croissant (Err) représente une erreur de vitesse croissante (ΔX_{I}/ΔX_{II}).

5. Procédé selon la revendication précédente, comprenant en outre les étapes suivantes :
- Comparaison de l'au moins une valeur de l'indice d'erreur (X_{Err}) à une valeur de seuil (TH_{Err}) prédéfinie à cet effet, la valeur de seuil représentant une erreur de vitesse maximale admissible du système d'appareils de mesure ; ainsi que
- Génération du message, dans le cas où la valeur d'indice (X_{Err}) dépasse ou a dépassé la valeur de seuil (TH_{Err}).

6. Procédé selon l'une des revendications précédentes, comprenant en outre l'étape suivante :
- Émission de valeurs mesurées (X_{I}) de premier type et/ou de valeurs mesurées (X_{II}) de second type en tant que valeurs mesurées qualifiées du système d'appareils de mesure, dans le cas où l'au moins une valeur d'indice n'a pas dépassé la valeur de seuil.

7. Procédé selon l'une des revendications précédentes, pour lequel la détermination de l'indice d'erreur (X_{Err}) comprend une détermination d'une différence de valeurs mesurées (ΔX_{I}) de premier type, à savoir une différence de deux valeurs mesurées (X_{I}) de premier type déterminées successivement dans le temps pour un intervalle de temps (Δt) prédéfini, et une détermination d'une différence de valeurs mesurées (ΔX_{II}) de second type, à savoir une différence (ΔX_{II}) de deux valeurs mesurées (X_{II}) de second type déterminées successivement dans le temps pour le même intervalle de temps (Δt).

8. Procédé selon la revendication précédente, pour lequel la détermination de l'indice d'erreur (X_{Err}) comprend une détermination d'un quotient de la différence de valeurs mesurées (ΔX_{I}) de premier type et de la différence de valeurs mesurées (ΔX_{II}) de second type.

9. Procédé selon l'une des revendications précédentes, pour lequel la détermination de l'indice d'erreur (Err) comprend une détermination à la fois d'un taux de variation (ΔX_{I}/Δt) des valeurs mesurées (X_{I}) de premier type à partir de la différence de valeurs mesurées (ΔX_{I}) de premier type autour de l'intervalle de temps prédéterminé (Δt) et d'un taux de variation (ΔX_{II}/Δt) des valeurs mesurées (X_{II}) de second type à partir de la différence de valeurs mesurées (ΔX_{I}) de premier type et de l'intervalle de temps (Δt) prédéfini.

10. Procédé selon la revendication précédente, pour lequel la détermination de l'indice d'erreur (X_{Err}) comprend une détermination d'un quotient du taux de variation (ΔX_{I}/Δt) des valeurs mesurées (X_{I}) de premier type et du taux de variation (ΔX_{II}/Δt) des valeurs mesurées (X_{II}) de second type.

11. Procédé selon l'une des revendications précédentes, pour lequel le premier appareil de mesure est un débitmètre massique Coriolis, notamment un débitmètre massique/densimètre Coriolis.

12. Procédé selon l'une des revendications précédentes, pour lequel le premier appareil de mesure est conçu pour mesurer un débit massique et/ou un débit volumique, notamment également une densité, d'un produit s'écoulant à travers ledit appareil de mesure.

13. Procédé selon l'une des revendications précédentes, pour lequel le deuxième appareil de mesure est un appareil de mesure de pression différentielle.

14. Procédé selon l'une des revendications précédentes, pour lequel le deuxième appareil de mesure est conçu pour mesurer une différence de pression dans un produit s'écoulant à travers ledit appareil de mesure, et/ou un débit volumique dudit produit.

15. Procédé selon l'une des revendications précédentes,
- pour lequel la première grandeur de mesure primaire (x1) est un débit massique (m = dM/dt → x1) d'un produit traversant le premier appareil de mesure, notamment à la fois le premier appareil de mesure et le deuxième appareil de mesure ; et/ou
- pour lequel la première grandeur de mesure secondaire (x1') est un débit volumique (v = dV/dt → x1') d'un produit traversant le premier appareil de mesure, notamment à la fois le premier appareil de mesure et le deuxième appareil de mesure ; et/ou
- pour lequel la deuxième grandeur de mesure primaire (x2) est une différence de pression (Δp → x2) à l'intérieur d'un produit traversant le deuxième appareil de mesure, notamment à la fois le deuxième appareil de mesure et le premier appareil de mesure ; et/ou
- pour lequel la deuxième grandeur de mesure secondaire (x2') est un débit volumique (v = dV/dt → x2') d'un produit traversant le deuxième appareil de mesure, notamment à la fois le deuxième appareil de mesure et le premier appareil de mesure ; et/ou
- pour lequel la grandeur perturbatrice (y1) est un flux magnétique ou une densité de flux magnétique (B → y1) d'un champ magnétique à l'intérieur du premier appareil de mesure, notamment d'un champ magnétique se fermant à l'extérieur du premier appareil de mesure (M1) ou provoqué par un aimant positionné à l'extérieur du premier appareil de mesure (M1).

16. Procédé selon l'une des revendications précédentes, pour lequel au moins le premier signal de mesure (s1) comprend au moins un deuxième paramètre de signal qui suit une variation dans le temps d'une troisième grandeur de mesure primaire (ρ → x3) avec une variation dans le temps.

17. Procédé selon la revendication précédente, comprenant en outre l'étape suivante : utilisation du premier signal de mesure (s1) également pour déterminer des valeurs mesurées (X_{III}) de troisième type représentant la troisième grandeur de mesure primaire (x3).

18. Procédé selon la revendication précédente, comprenant en outre les étapes suivantes :
- Utilisation également des valeurs mesurées (X_{III}) de troisième type pour déterminer les valeurs mesurées (X_{I}) de premier type ; et/ou
- Utilisation également des valeurs mesurées (X_{III}) de troisième type pour déterminer les valeurs mesurées (X_{II}) de second type.

19. Procédé selon l'une des revendications 16 à 18, pour lequel la troisième grandeur de mesure primaire (x3) est une densité (ρ → x3) d'un produit traversant le premier appareil de mesure (M1).

20. Procédé selon l'une des revendications précédentes, comprenant en outre les étapes suivantes :
- Utilisation du premier appareil de mesure (M1) pour générer un troisième signal de mesure (s3), lequel présente au moins un paramètre de signal qui suit à la fois la variation dans le temps (Δx1/Δt ; Δx1'/Δt) de la première grandeur de mesure primaire (x1) et la variation dans le temps (Δy1/Δt) de la grandeur perturbatrice (y1) respectivement avec une variation dans le temps ; ainsi que
- Détermination de valeurs mesurées (X_{I}) de premier type à l'aide également de l'au moins un paramètre de signal du troisième signal de mesure (s3).

21. Procédé selon l'une des revendications précédentes, comprenant en outre : l'émission de valeurs mesurées (X_{II}) de second type en tant que valeurs mesurées qualifiées du système d'appareils de mesure dans le cas où l'au moins une valeur d'indice n'a pas dépassé la valeur de seuil.

22. Procédé selon l'une des revendications précédentes, comprenant en outre : l'empêchement d'une sortie d'au moins des valeurs mesurées (X_{I}) de premier type en tant que valeurs mesurées qualifiées du système d'appareils de mesure en fonction de l'indice d'erreur (Err) déterminé.
